(19) Europäisches Patentamt
European Patent Office
Office européen des brevets

(11) **EP 4 403 524 A1**

(12) # EUROPEAN PATENT APPLICATION

(43) Date of publication:
**24.07.2024 Bulletin 2024/30**

(21) Application number: **23216724.7**

(22) Date of filing: **14.12.2023**

(51) International Patent Classification (IPC):
**C01G 53/00** (2006.01)       **H01M 4/505** (2010.01)

(52) Cooperative Patent Classification (CPC):
**C01G 53/006; C01G 53/50; H01M 4/505;**
**H01M 10/0525;** C01P 2002/60; C01P 2004/45;
C01P 2004/51; C01P 2004/61; C01P 2006/40;
H01M 2004/021; H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.01.2023 JP 2023007041**

(71) Applicant: **Prime Planet Energy & Solutions, Inc.**
**Chuo-ku**
**Tokyo**
**103-0022 (JP)**

(72) Inventors:
• **WATANABE, Hiroki**
 **Tokyo, 103-0022 (JP)**
• **TABUSHI, Akihiro**
 **Tokyo, 103-0022 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POSITIVE ELECTRODE NCM-BASED ACTIVE MATERIAL, POSITIVE ELECTRODE, AND BATTERY**

(57)     The present disclosure relates to a positive electrode NCM (nickel-cobalt-manganese)-based active material (11) in which a crystallite size is 460 Å or more, and also relates to a positive electrode (20) including the positive electrode NCM-based active material (11), and a battery (100) including the positive electrode (20). According to the present disclosure, there are provided: the positive electrode NCM-based active material (11) that can exhibit an improved cycling performance as well as high thermal stability; the positive electrode (20) including the positive electrode NCM-based active material (11); and the battery (100) including the positive electrode (20).

FIG.1

**Description**

CROSS REFERENCE TO RELATED APPLICATIONS

This nonprovisional application is based on Japanese Patent Application No. 2023-007041 filed on January 20, 2023 with the Japan Patent Office, the entire contents of which are hereby incorporated by reference.

BACKGROUND OF THE INVENTION

Field of the Invention

The present invention relates to a positive electrode NCM-based active material (hereinafter also referred to as an active material), a positive electrode, and a battery.

Description of the Background Art

Japanese Patent Laying-Open No. 2017-162790 discloses a positive electrode active material for a non-aqueous electrolyte secondary battery, wherein an added element substitutes for a nickel atom at a 3b site of a lithium metal composite oxide so as to attain a short bond distance between an oxygen atom and a transition metal atom.

SUMMARY OF THE INVENTION

A positive electrode including a lithium nickel composite oxide is likely to generate heat and release oxygen during charging or discharging, and tends to be low in thermal stability. When an added element substitutes for a nickel element in order to improve thermal stability, an active material including the added element tends to have a cycling performance lower than that of an active material not including the added element.

An object of the present invention is to provide a positive electrode NCM (nickel-cobalt-manganese)-based active material that can exhibit an improved cycling performance as well as high thermal stability.

The present invention provides the following positive electrode NCM-based active material, positive electrode, and battery.

[1] A positive electrode NCM-based active material, wherein a crystallite size is 460 Å or more.

[2] The positive electrode NCM-based active material according to [1], wherein the crystallite size is 570 Å or more.

[3] The positive electrode NCM-based active material according to [1] or [2], wherein the crystallite size is 710 Å or less.

[4] The positive electrode NCM-based active material according to any one of [1] to [3], comprising an aggregated particle in which a diameter D50 of a secondary particle is 14 $\mu$m or more and 18 $\mu$m or less.

[5] The positive electrode NCM-based active material according to any one of [1] to [4], wherein a weight decrease amount in thermal mass spectrometry at 120 to 600°C and a temperature increase rate of 5°C/min is 12 mass% or less.

[6] The positive electrode NCM-based active material according to any one of [1] to [5], wherein a weight decrease ratio per minute in thermal mass spectrometry at 120 to 600°C and a temperature increase rate of 5°C/min is 0.46 mass%/min or less.

[7] A positive electrode comprising the positive electrode NCM-based active material according to any one of [1] to [6].

[8] A battery comprising the positive electrode according to [7].

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic diagram showing an exemplary lithium ion battery according to the present embodiment.

Fig. 2 is a schematic diagram showing an exemplary electrode assembly according to the present embodiment.

Fig. 3 is a conceptual diagram showing a positive electrode according to the present embodiment.

Fig. 4 is a schematic flowchart of a method of manufacturing the positive electrode according to the present embodiment.

## DESCRIPTION OF THE PREFERRED EMBODIMENTS

Hereinafter, embodiments of the present invention will be described with reference to figures, but the present invention is not limited to the below-described embodiments. In each of all the figures described below, a scale is appropriately adjusted to facilitate understanding of each component, and the scale of each component shown in the figures does not necessarily coincide with the actual scale of the component.

<Active Material>

An active material includes one or more compounds each containing nickel, cobalt, and manganese. Respective content ratios of nickel with respect to the metal elements other than lithium in the active material may be, for example, 50 mol% or more and 60 mol% or more, and are preferably 60 mol% or more and 70 mol% or more. Each of the compounds each containing nickel, cobalt and manganese preferably includes a nickel-cobalt-manganese composite hydroxide, and more preferably includes a lithium-nickel-cobalt-manganese composite oxide. The nickel-cobalt-manganese composite hydroxide may be obtained by, for example, a coprecipitation method or the like. The nickel-cobalt-manganese composite hydroxide may be, for example, a compound represented by the following general formula: $Ni_xCo_yMn_z(OH)_2$ (where $x+y+z=1$). In the lithium-nickel-cobalt-manganese composite oxide, a molar ratio, Li:(Ni+Co+Mn), of lithium to nickel, cobalt and manganese can be, for example, 1.0 to 1.2 : 1.0. The active material can be used for a lithium ion battery. The lithium ion battery will be described in detail later.

The active material may include, for example, a first lamellar metal oxide. The first lamellar metal oxide is represented by the following formula (1):

$$Li_{1-a1}Ni_{x1}Me^1_{1-x1}O_2 \qquad (1)$$

In the formula (1), "a1" satisfies the relation "$-0.3 \leq a1 \leq 0.3$", "x1" satisfies the relation "$0.5 \leq x1 < 1.0$", and "$Me^1$" represents at least one selected from a group consisting of Co, Mn, Al, Zr, Ti, V, Cr, Fe, Cu, Zn, B, Mo, Sn, Ge, Nb, and W.

The active material may include, for example, a second lamellar metal oxide.

The second lamellar metal oxide is represented by the following formula (2):

$$Li_{1-a2}Ni_{x2}Me^2_{1-x2}O_2 \qquad (2)$$

In the formula (2), "a2" satisfies the relation "$-0.3 \leq a2 \leq 0.3$", "x2" satisfies the relation "$0.6 \leq x2 \leq 1.0$", and "$Me^2$" represents at least one selected from a group consisting of Co, Mn, Al, Zr, Ti, V, Cr, Fe, Cu, Zn, B, Mo, Sn, Ge, Nb, and W.

In the formulas (1) and (2), for example, the relation "x1<x2" may be satisfied.

The active material may include, for example, at least one selected from a group consisting of $LiNi_{0.8}Co_{0.1}Mn_{0.1}O_2$, $LiNi_{0.7}Co_{0.2}Mn_{0.1}O_2$, $LiNi_{0.7}Co_{0.1}Mn_{0.2}O_2$, $LiNi_{0.6}Co_{0.3}Mn_{0.1}C_2$, $LiNi_{0.6}Co_{0.2}Mn_{0.2}O_2$, $LiNi_{0.6}Co_{0.1}Mn_{0.3}O_2$, and $LiNi_{0.55}Co_{0.20}Mn_{0.25}O_2$. For example, each of a primary particle and a single-particle as described later may include at least one selected from a group consisting of $LiNi_{0.8}Co_{0.1}Mn_{0.1}O_2$, $LiNi_{0.7}Co_{0.2}Mn_{0.1}O_2$, $LiNi_{0.7}Co_{0.1}Mn_{0.2}O_2$, and $LiNi_{0.55}Co_{0.20}Mn_{0.25}O_2$.

In the active material, a crystallite size is 460 Å or more. Since the crystallite size is within the above range, excellent thermal stability can be exhibited. The crystallite size can be found in accordance with a method described in the below-described section "Examples". In the active material, the crystallite size is preferably 570 Å or more from the viewpoint of the weight decrease ratio per minute in thermal mass spectrometry at 120 to 600°C and a temperature increase rate of 5°C/min. In the active material, the crystallite size is preferably 710 Å or less from the viewpoint of the cycling performance.

When the active material includes a lithium-nickel-cobalt-manganese composite oxide, the active material can be synthesized through, for example, two calcination steps, i.e., a first calcination step of calcining a first mixture including a lithium compound and a transition metal compound, and a second calcination step of calcining a second mixture including the calcined material obtained in the first calcination step and a transition metal compound. The crystallite size can be appropriately controlled by controlling calcination parameters (for example, a calcination temperature, a calcination time, and the like) in each of the first calcination step and the second calcination step.

The active material can include an aggregated particle in which an average particle size D50 of a secondary particle is 14 μm or more and 18 μm or less. Average particle size D50 represents a particle size corresponding to a cumulative particle volume of 50% from the small particle size side with respect to the total particle volume in the volume-based particle size distribution. The average particle size can be measured by a laser diffraction/scattering method.

A primary particle included in the secondary particle is a particle having an external appearance in which no grain boundary can be confirmed in an SEM image of the particle. An average primary particle size represents a distance between two points furthest away from each other on a contour line of the primary particle. The average primary particle size of the primary particle may be, for example, 0.05 $\mu$m or more and 0.7 $\mu$m or less, or 0.1 $\mu$m or more and 0.6 $\mu$m or less. When ten or more primary particles randomly extracted from an SEM image of one aggregated particle have an average primary particle size of 0.05 $\mu$m to 0.2 $\mu$m, it is assumed that all the primary particles included in the aggregated particle have an average primary particle size of 0.05 $\mu$m to 0.2 $\mu$m. The primary particle may have an average primary particle size of, for example, 0.2 $\mu$m to 0.5 $\mu$m.

The active material can further include a single-particle. An average particle size D50 of the single-particle may be, for example, 1 $\mu$m or more and 20 $\mu$m or less, is preferably 1 $\mu$m or more and 10 $\mu$m or less, and is more preferably 1 $\mu$m or more and 5 $\mu$m or less. The single-particle may be surface-coated.

In the active material, a weight decrease amount in thermal mass spectrometry at a temperature of 120 to 600°C and a temperature increase rate of 5°C/min can be 12 mass% or less. Further, in the active material, a weight decrease ratio per minute in thermal mass spectrometry at a temperature of 120 to 600°C and a temperature increase rate of 5°C/min may be 0.46 mass%/min or less, and is preferably 0.40 mass%/min. The thermal mass spectrometry is performed in accordance with a method described in the below-described section "Examples".

The positive electrode including the active material may have a cycle capacity retention of, for example, 93.3% or more, and preferably has a cycle capacity retention of 93.8% or more. The cycle capacity retention is found in accordance with a method described in the below-described section "Examples".

<Lithium Ion Battery>

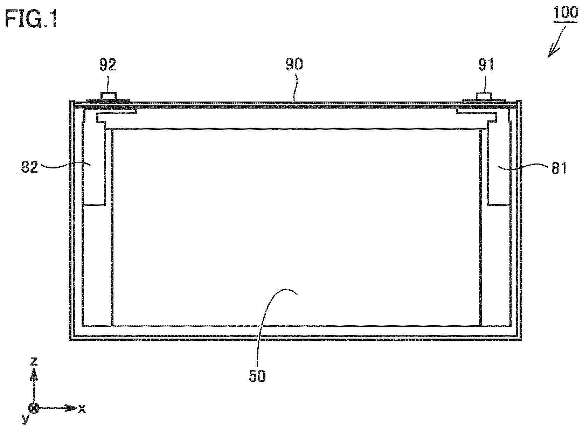

Fig. 1 is a schematic diagram showing an exemplary lithium ion battery according to the present embodiment. A battery 100 shown in Fig. 1 may be, for example, a lithium ion battery for a main electric power supply, a motive power assisting electric power supply, or the like in an electrically powered vehicle.

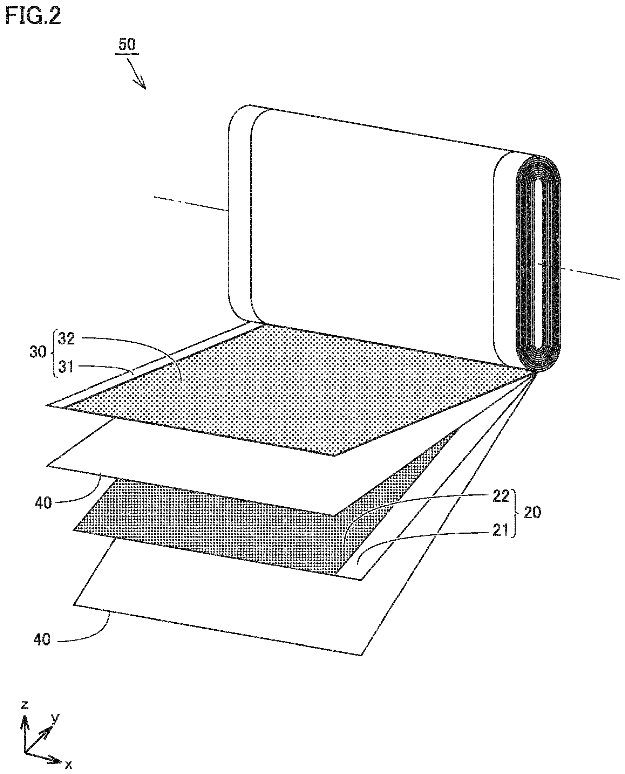

Battery 100 includes an exterior package 90. Exterior package 90 accommodates an electrode assembly 50 and an electrolyte (not shown). Electrode assembly 50 is connected to a positive electrode terminal 91 by a positive electrode current collecting member 81. Electrode assembly 50 is connected to a negative electrode terminal 92 by a negative electrode current collecting member 82. Fig. 2 is a schematic diagram showing an exemplary electrode assembly in the present embodiment. Electrode assembly 50 is of a wound type. Electrode assembly 50 includes a positive electrode 20, separators 40, and a negative electrode 30. That is, battery 100 includes positive electrode 20. Positive electrode 20 includes a positive electrode active material layer 22 and a positive electrode substrate 21. Negative electrode 30 includes a negative electrode active material layer 32 and a negative electrode substrate 31.

<Positive Electrode>

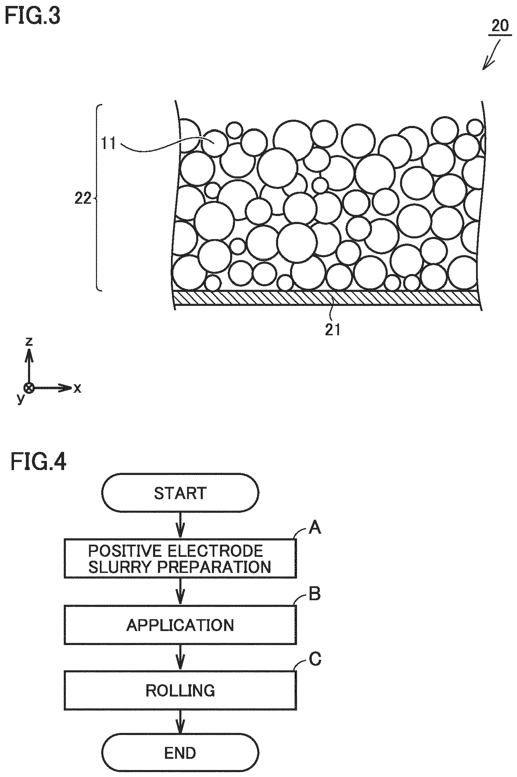

As shown in Fig. 3, in positive electrode 20, positive electrode active material layer 22 may be formed directly or indirectly on one or both surfaces of positive electrode substrate 21. Positive electrode substrate 21 may be a conductive sheet composed of, for example, an Al alloy foil, a pure Al foil, or the like. Positive electrode active material layer 22 includes an active material 11. Positive electrode active material layer 22 may further include a conductive material, a binder, and the like. Active material 11 includes the positive electrode NCM-based active material described above.

Positive electrode active material layer 22 may have a thickness of, for example, 10 $\mu$m to 200 $\mu$m. Positive electrode active material layer 22 can have a high density. The density of positive electrode active material layer 22 may be, for example, 3.5 g/cm$^3$ or more, or may be 3.6 g/cm$^3$ or more, or 3.7 g/cm$^3$ or more. Positive electrode active material layer 22 may have a density of, for example, 4.0 g/cm$^3$ or less.

<Method of Manufacturing Positive Electrode>

As shown in Fig. 4, a method of manufacturing positive electrode 20 according to the present embodiment includes positive electrode slurry preparation (A), application (B) and rolling (C). In the positive electrode slurry preparation (A), a positive electrode slurry including the above-described active material is prepared. The positive electrode slurry is prepared by dispersing the active material in a dispersion medium. In the application (B), the positive electrode slurry is applied to a surface of positive electrode substrate 21, thereby forming positive electrode active material layer 22. In the rolling (C), positive electrode active material layer 22 and positive electrode substrate 21 are rolled, thereby manufacturing positive electrode 20. A raw sheet of positive electrode 20 is manufactured by the rolling. The raw sheet can be cut into a predetermined planar size in accordance with a specification of battery 100.

[Examples]

Hereinafter, the present invention will be described in more detail with reference to examples. "%" and "parts" in the examples are mass% and parts by mass unless otherwise stated particularly.

[Production of Positive Electrode for Evaluation on Cycling Performance]

A positive electrode active material 1 produced in each of Examples and Comparative Examples and a positive electrode active material 2 produced as described below were mixed at a ratio of 1:1, and mixing was performed such that the mixture had 97.5 parts by mass, carbon black serving as a conductive material had 1.5 parts by mass, and polyvinylidene difluoride (PVdF) serving as a binder had 1.0 parts by mass, and an appropriate amount of N-methyl-2-pyrrolidone (NMP) was further added, thereby preparing a positive electrode composite material slurry. The slurry was applied to a current collector composed of an aluminum foil, thereby forming a positive electrode composite material layer. Thereafter, drying was performed, compression was performed to attain a positive electrode composite material density of 3.55 g/cm$^3$ using a roller, cutting was performed to attain a predetermined size, and an aluminum tab was attached, thereby forming a positive electrode.

Synthesis of Second Positive Electrode Active Material:
A transition metal compound represented by $Ni_{0.60}CO_{0.20}Mn_{0.20}(OH)_2$ was mixed with LiOH, and a second positive electrode active material (lithium-nickel composite oxide with a particle size of 3 to 6 $\mu$m) was obtained through the first calcination step and the second calcination step. An average particle size D50 of the second positive electrode active material was 4.0 $\mu$m.

[Production of Positive Electrode for TG Measurement]

Mixing was performed such that positive electrode active material 1 produced in each of the Examples and the Comparative Examples had 89.0 parts by mass, carbon black serving as a conductive material had 1.0 parts by mass, and polyvinylidene difluoride (PVdF) serving as a binder had 10 parts by mass, and an appropriate amount of N-methyl-2-pyrrolidone (NMP) was further added, thereby preparing a positive electrode composite material slurry. The slurry was applied to a current collector composed of aluminum foil, thereby forming a positive electrode composite material layer. Thereafter, drying was performed, rolling was performed to attain a predetermined thickness using a roller, cutting was performed to attain a predetermined size, and an aluminum tab was attached, thereby forming a positive electrode.

[Production of Negative Electrode]

A negative electrode active material, carboxymethyl cellulose (CMC) serving as a thickener, and styrene-butadiene rubber (SBR) serving as a binder were measured in amount to attain a mass ratio of 98:1:1, and were dispersed in water, thereby preparing a negative electrode composite material slurry. The negative electrode composite material slurry was applied to a current collector composed of a copper foil, thereby forming a negative electrode composite material layer. Thereafter, drying was performed, rolling was performed to attain a predetermined thickness using a roller, cutting was performed to attain a predetermined size, and a nickel tab was attached, thereby forming a negative electrode.

[Preparation of Non-Aqueous Electrolyte]

Ethylene carbonate (EC), dimethyl carbonate (DMC) and ethyl methyl carbonate (EMC) were mixed at a volume ratio of 30:30:40. Lithium hexafluorophosphate (LiPF$_6$) was added to the mixed solvent to attain a concentration of 1.15 mol/liter. Further, vinylene carbonate (VC) was added to have an addition ratio of 1.0 mass% with respect to the total mass of this mixed solvent, thereby preparing a non-aqueous electrolyte.

[Evaluation on Crystallite Size]

A powder sample of the first positive electrode active material was introduced into a dedicated folder of a full-automatic multi-purpose X-ray diffraction device (SmartLab provided by Rigaku) and was measured by a reflection method, thereby obtaining an X-ray diffraction pattern. For a vacuum tube (target element), Cu was used, a tube voltage was 45 kV, and a tube current was 200 mA. From the measurement result, the crystallite size was calculated in accordance with the half width (d) of a crystal peak (104 plane) that appears at $2\theta = 44$ to $45°$.

[Evaluation on Cycling Performance]

The positive electrode obtained by the method of producing a positive electrode plate for evaluation on the cycling performance and the negative electrode were stacked with a separator composed of polyolefin being interposed therebetween, thereby producing a stack type electrode assembly. This electrode assembly was accommodated in an exterior package composed of an aluminum laminate sheet, the non-aqueous electrolyte above was introduced thereinto, and the opening of the exterior package was then sealed, thereby obtaining a test cell. For the test cell above, constant-current charging was performed under a temperature condition of 25°C at a current density of 0.2 mA/cm$^2$ until 4.25 V was attained, and constant-voltage charging was further performed at 4.25 V until a current density of 0.04 mA/cm$^2$ was attained, thereby finding a charging capacity. After 10 minutes of resting, constant-current discharging was performed at a current density of 0.2 mA/cm$^2$ until 3.0 V was attained, thereby finding a discharging capacity.

For the cell, constant-current charging was performed under a temperature condition of 25°C at a current density of 0.2 mA/cm$^2$ until 4.18 V was attained, constant-voltage charging was further performed at 4.18 V until a current density of 0.04 mA/cm$^2$ was attained, and then constant-current discharging was performed at a current density of 0.2 mA/cm$^2$ until 3.48 V was attained. With the above-described charging/discharging conditions being assumed as one cycle, charging/discharging was performed up to 200 cycles and the capacity retention was calculated in accordance with the following formula:

$$\text{Capacity retention (\%)} = \text{discharging capacity at the 200-th cycle} / \text{discharging capacity at the first cycle} \times 100.$$

[Evaluation on Thermal Stability]

(Production of Test Cell)

The positive electrode obtained by the method of producing a positive electrode plate for TG measurement and a metal lithium were wound with a separator composed of polyolefin being interposed therebetween, thereby producing a wound electrode assembly. This electrode assembly was accommodated in an exterior package composed of an aluminum laminate sheet, the non-aqueous electrolyte above was introduced thereinto, and the opening of the exterior package was then sealed, thereby obtaining a test cell.

(Sample Production Method for TG Measurement)

For the cell, constant-current charging was performed under a temperature condition of 25°C at a current density of 0.2 mA/cm$^2$ until 4.35 V was attained, constant-voltage charging was further performed at 4.35 V until a current density of 0.04 mA/cm$^2$ was attained, and then constant-current discharging was performed at a current density of 0.04 mA/cm$^2$ until 2.5 V was attained. After one cycle of the above-described charging/discharging conditions, constant-current charging was performed at a current density of 0.2 mA/cm$^2$ until 4.40 V was attained, and constant-voltage charging was performed at 4.40 V until a current density of 0.04 mA/cm$^2$ was attained. The cell was disassembled in a glove box, the positive electrode plate was removed, cleaning was performed with DMC, and vacuum-drying was performed. The positive electrode composite material layer was cut away from the core body of the positive electrode plate, thereby forming a sample for TG measurement.

(TG Measurement Method)

20 mg of the sample was measured and placed on a TG pan of a measurement device (measurement by DTG-60AH provided by SHIMADZU) and therefore was set in the device. Measurement was performed under an Ar atmosphere at a temperature increase rate of 5°C/min with the upper limit of the temperature being 600°C. A weight decrease amount and a weight decrease ratio per minute at 120°C to 600°C were calculated.

<Example 1>

A transition metal compound represented by Ni$_{0.55}$Co$_{0.20}$Mn$_{0.25}$(OH)$_2$ was mixed with LiOH, and then the first calcination step and the second calcination step were performed, thereby obtaining a first positive electrode active material. An average particle size D50 of the first positive electrode active material was 16.0 μm, and a crystallite size is 578 Å.

<Examples 2 to 5 and Comparative Examples 1 to 4>

Each of first positive electrode active materials was produced in the same manner as in Example 1 except that the crystallite size was controlled by controlling the parameters in the first and second calcination steps in Example 1. Results are shown in Table 1.

[Table 1]

|  | Crystallite Size (Å) | Weight Decrease Amount (%) | Weight Decrease Ratio per Minute (%/min) | Cycling Performance (%) | Determination |
|---|---|---|---|---|---|
| Comparative Example 1 | 416 | 12.5 | 0.41 | 93.3 | X |
| Comparative Example 2 | 430 | 12.1 | 0.48 | 93.4 | X |
| Comparative Example 3 | 431 | 12.5 | 0.42 | 93.2 | X |
| Comparative Example 4 | 446 | 12.3 | 0.42 | 93.4 | X |
| Example 1 | 468 | 11.7 | 0.46 | 94.2 | O |
| Example 2 | 578 | 11.2 | 0.33 | 93.8 | OO |
| Example 3 | 702 | 11.4 | 0.35 | 93.8 | OO |
| Example 4 | 710 | 11.6 | 0.34 | 93.9 | OO |
| Example 5 | 742 | 11.8 | 0.34 | 93.3 | OO |

In Table 1, when the cycling performance was 93.3% or more, the weight decrease amount was 12% or less, and the weight decrease ratio per minute was 0.40%/min or less, it was determined as "OO"; when the cycling performance was 93.3% or more, the weight decrease amount was 12% or less, and the weight decrease ratio per minute was 0.46%/min or less, it was determined as "O"; and otherwise, it was determined as "X". In each of Examples 1 to 5 according to the present invention, both high thermal stability and improved cycling performance could be attained.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

**Claims**

1. A positive electrode NCM-based active material, wherein a crystallite size is 460 Å or more.

2. The positive electrode NCM-based active material according to claim 1, wherein the crystallite size is 570 Å or more.

3. The positive electrode NCM-based active material according to claim 2, wherein the crystallite size is 710 Å or less.

4. The positive electrode NCM-based active material according to claim 1, comprising an aggregated particle in which a diameter D50 of a secondary particle is 14 $\mu$m or more and 18 $\mu$m or less.

5. The positive electrode NCM-based active material according to claim 1, wherein a weight decrease amount in thermal mass spectrometry at 120 to 600°C and a temperature increase rate of 5°C/min is 12 mass% or less.

6. The positive electrode NCM-based active material according to claim 1, wherein a weight decrease ratio per minute in thermal mass spectrometry at 120 to 600°C and a temperature increase rate of 5°C/min is 0.46 mass%/min or less.

7. A positive electrode comprising the positive electrode NCM-based active material (11) according to claim 1.

8. A battery comprising the positive electrode (20) according to claim 7.

FIG.1

FIG.2

FIG.3

20

11

22

21

z
y
x

FIG.4

START

POSITIVE ELECTRODE
SLURRY PREPARATION
A

APPLICATION
B

ROLLING
C

END

# EP 4 403 524 A1

| | Europäisches Patentamt European Patent Office Office européen des brevets | **EUROPEAN SEARCH REPORT** | **Application Number** EP 23 21 6724 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 864 923 A (BASF SHANSHAN BATTERY MAT CO LTD) 5 August 2022 (2022-08-05) * the whole document * * in particular example 3 (table 1) and claims 1-4 * ----- | 1-8 | INV. C01G53/00 H01M4/505 |
| X | US 2017/237069 A1 (TAKAMORI KENJI [JP] ET AL) 17 August 2017 (2017-08-17) * abstract * * paragraphs [0009] - [0018], [0048] - [0065], [0090], [0097] - [0099], [0147] - [0174] * * figures 1-3 * * claims 1-10 * * tables 1-2 * * in particular comparative examples 1, 3 and 5 * ----- | 1-8 | |
| X | US 2016/372749 A1 (IIDA YASUTAKA [JP] ET AL) 22 December 2016 (2016-12-22) * abstract * * paragraphs [0007] - [0040], [0056] - [0063], [0086], [0182] - [0217] * * table 1 * * in particular in particular examples 2 and 5; tables 1-2 * ----- | 1-8 | TECHNICAL FIELDS SEARCHED (IPC) C01G H01M |
| X | JP 2021 177460 A (SUMITOMO CHEMICAL CO) 11 November 2021 (2021-11-11) * abstract * * paragraphs [0007] - [0013], [0013], [0015], [0022] - [0045], [0237] - [0248] * * in particular examples 1-3 * * tables 1-2 * * claims 1-13 * ----- -/-- | 1-8 | |

The present search report has been drawn up for all claims

| Place of search | Date of completion of the search | Examiner |
|---|---|---|
| Munich | 10 June 2024 | Heer, Stephan |

EPO FORM 1503 03.82 (P04C01)

page 1 of 2

Europäisches
Patentamt

European
Patent Office

Office européen
des brevets

**EUROPEAN SEARCH REPORT**

Application Number

EP 23 21 6724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/408538 A1 (AOKI YOSHINORI [JP] ET AL) 30 December 2021 (2021-12-30) <br> * abstract * <br> * in particular example 2 and comparative examples 1 and 4-6 * <br> * table 1 * <br> ----- | 1-8 | |
| X | US 2021/226211 A1 (AOKI YOSHINORI [JP] ET AL) 22 July 2021 (2021-07-22) <br> * abstract * <br> * paragraphs [0008] - [0009], [0036] - [0037] * <br> * claims 1-5 * <br> * table 4 * <br> * in particular examples 2, 3-2, 3-6 and 3-7; table 4 * <br> ----- | 1-8 | |

**TECHNICAL FIELDS SEARCHED    (IPC)**

The present search report has been drawn up for all claims

| Place of search | Date of completion of the search | Examiner |
|---|---|---|
| Munich | 10 June 2024 | Heer, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 6724

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | | Publication date | Patent family member(s) | | Publication date |
|---|---|---|---|---|---|
| CN 114864923 | A | 05-08-2022 | NONE | | |
| US 2017237069 | A1 | 17-08-2017 | CN | 107078293 A | 18-08-2017 |
| | | | EP | 3208872 A1 | 23-08-2017 |
| | | | JP | 6726102 B2 | 22-07-2020 |
| | | | JP | WO2016060105 A1 | 31-08-2017 |
| | | | KR | 20170057450 A | 24-05-2017 |
| | | | KR | 20190026061 A | 12-03-2019 |
| | | | US | 2017237069 A1 | 17-08-2017 |
| | | | WO | 2016060105 A1 | 21-04-2016 |
| US 2016372749 | A1 | 22-12-2016 | CN | 105378987 A | 02-03-2016 |
| | | | EP | 3021387 A1 | 18-05-2016 |
| | | | JP | 5701343 B2 | 15-04-2015 |
| | | | JP | 2015018678 A | 29-01-2015 |
| | | | KR | 20160030090 A | 16-03-2016 |
| | | | KR | 20210016076 A | 10-02-2021 |
| | | | US | 2016372749 A1 | 22-12-2016 |
| | | | WO | 2015005180 A1 | 15-01-2015 |
| JP 2021177460 | A | 11-11-2021 | CN | 115516668 A | 23-12-2022 |
| | | | EP | 4148021 A1 | 15-03-2023 |
| | | | JP | 7471903 B2 | 22-04-2024 |
| | | | JP | 2021177460 A | 11-11-2021 |
| | | | KR | 20230008070 A | 13-01-2023 |
| | | | US | 2023163294 A1 | 25-05-2023 |
| | | | WO | 2021225095 A1 | 11-11-2021 |
| US 2021408538 | A1 | 30-12-2021 | CN | 112996752 A | 18-06-2021 |
| | | | CN | 116706053 A | 05-09-2023 |
| | | | EP | 3889111 A1 | 06-10-2021 |
| | | | JP | 7316565 B2 | 28-07-2023 |
| | | | JP | 2023118858 A | 25-08-2023 |
| | | | JP | WO2020110590 A1 | 14-10-2021 |
| | | | US | 2021408538 A1 | 30-12-2021 |
| | | | WO | 2020110590 A1 | 04-06-2020 |
| US 2021226211 | A1 | 22-07-2021 | CN | 112602213 A | 02-04-2021 |
| | | | EP | 3846263 A1 | 07-07-2021 |
| | | | JP | 7300610 B2 | 30-06-2023 |
| | | | JP | 2023111960 A | 10-08-2023 |
| | | | JP | WO2020044614 A1 | 12-08-2021 |
| | | | US | 2021226211 A1 | 22-07-2021 |
| | | | US | 2023207801 A1 | 29-06-2023 |
| | | | WO | 2020044614 A1 | 05-03-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023007041 A

- JP 2017162790 A